# EUROPÄISCHE PATENTSCHRIFT

(11) **EP 3 828 523 B1**
(45) Veröffentlichungstag und Bekanntmachung des Hinweises auf die Patenterteilung: **24.08.2022**
(21) Anmeldenummer: 20210171.3
(22) Anmeldetag: 27.11.2020
(51) Int. Cl.: G01K 13/02, G01K 1/143, G01K 7/04, G01K 1/02, F16J 15/06, F16L 23/00, F16L 23/18

(54) **PROZESSDICHTUNG MIT INTEGRIERTEN THERMOELEKTRISCHEN TEMPERATURMESSSTELLEN UND VERFAHREN ZUR TEMPERATURERMITTLUNG UND SELBSTDIAGNOSE**
SEAL WITH INTEGRATED THERMOELECTRIC TEMPERATURE MEASURING POINTS AND METHOD FOR DETERMINING TEMPERATURE AND SELF-DIAGNOSIS
JOINT D'ÉTANCHÉITÉ POURVU DE CAPTEURS DE TEMPÉRATURE THERMOÉLECTRIQUES INTÉGRÉS ET PROCÉDÉ DE DÉTERMINATION DE LA TEMPÉRATURE ET D'AUTO-DIAGNOSTIC

(30) Priorität: 27.11.2019 DE 202019106610 U; 21.02.2020 DE 202020100959 U; 21.02.2020 DE 102020104648
(43) Veröffentlichungstag der Anmeldung: 02.06.2021
(73) Patentinhaber: Temperaturmeßtechnik Geraberg GmbH, 98693 Martinroda (DE)
(72) Erfinder: Irrgang, Klaus, Dr., 99331 Geratal, OT Geraberg, (DE); Irrgang, Barbara, 99331 Geratal, OT Geraberg (DE); Heinz, Andreas, 99331 Geratal, OT Geschwenda (DE); Bonitz, Björn, 98693 Ilmenau (DE)
(74) Vertreter: Liedtke & Partner Patentanwälte

(56) Entgegenhaltungen:
- DE-U1-202013 102 935
- DE-U1-202013 103 059
- US-A- 3 873 102
- US-A1- 2015 268 111

## Beschreibung

Die Erfindung betrifft eine Prozessdichtung für Verbindungen von Rohrleitungselementen mit integrierten thermoelektrischen Messstellen und ein Verfahren zur Temperaturermittlung und Selbstdiagnose.

Thermoelektrische Temperaturmessstellen, die in bzw. an Rohrleitungen bestehen, sind zahlreich in der chemischen Industrie, im Maschinenbau sowie im Lebensmittel- und im Pharmaziebereich vorhanden.

Bezüglich des Anbaus bzw. Einbaus der Temperaturfühler unterscheidet man zwischen invasiven und nichtinvasiven Fühlern.

Die invasiven Fühler ragen direkt in das Medium hinein, so dass die Fühlerspitze vom gasförmigen bzw. flüssigen Medium direkt berührt wird. Diese Fühler werden als Berührungsthermometer bezeichnet.

Im Allgemeinen verfügen diese Fühler über ein sogenanntes Schutzrohr, welches durch einen Prozessanschluss in die Rohrleitung und somit in den freien Strömungsquerschnitt der Rohrleitung eingeführt wird. Der Temperatursensor des Temperaturmessfühlers wird dabei von dem innerhalb der Rohrleitung befindlichen Medium umströmt. Daher kann eine präzise Messung der Medientemperatur durchgeführt werden. Allerdings kann der in den freien Strömungsquerschnitt hineinragende Messfühler das Strömungsverhalten der Rohrleitung negativ beeinflussen. Die Auslegung und Ausführung dieser Art der Messstelle ist überdies sehr aufwendig und insbesondere bei nachträglicher Installation äußerst kostenintensiv.

Beispielsweise ist in DE 102 36 036 A1 ein Hochtemperatursensor beschrieben, der ein Schutzrohr und einen Prozessanschluss aufweist, wobei ein das Messelement enthaltenes Schutzrohrteil in das Medium hineinragt und ein äußeres Schutzrohrteil die äußeren Anschlussleitungen aufnimmt. Das Medium, dessen Temperatur ermittelt werden soll, befindet sich beispielsweise in einer Rohrleitung. Ein elektrischer Anschluss ist die Koppelstelle der im Gehäuse verlaufenden Innenleitungen mit den äußeren Anschlussleitungen.

Eines der vielen Einsatzgebiete ist die Abgastemperaturmessung, bei der Temperaturmessstellen mit erhöhten mechanischen und thermischen Belastungen, die z.B. in Abgaskanälen von Verbrennungsmotoren auftreten, vorhanden sind. Nachteilig ist dabei, dass diese Temperaturfühler in engen Rohrleitungen nicht eingesetzt werden können und insbesondere einen speziellen die Rohrleitung durchdringenden Prozessanschluss, wie z.B. Flanschanschluss usw., benötigen. Meistens ist es sehr nachteilig, wenn der in das Medium hineinragende Temperaturfühler die Strömung beeinflusst.

Die nichtinvasiven Messstellen sind im Gegensatz zu den invasiven Messanordnungen nachträglich leicht zu installieren. Sie werden durch sogenannte Anlegetemperaturfühler realisiert. Insbesondere bei Nutzung der Molch-Reinigungstechnologie und für Messungen an engen Rohren werden sie verwendet. Sie verursachen aber einen höheren Temperaturmessfehler. Zur Verringerung des Messfehlers bei Anlegefühlern ist aus DE 102 27 454 A1 ein Temperaturfühler bekannt, bei dem in einem speziellen Anlegeteil ein Temperatursensor angeordnet ist. Der Fühler weist ein Anlegeteil mit einer Wärmeleitfolie auf.

In DE 10 2015 110 977 A1 wird eine Vorrichtung beschrieben, bei der in einem Dichtungsteil ein Sensor integriert ist. Das Dichtungsteil kann insbesondere eine Siebdichtung sein. Nachteilig ist insbesondere, dass der Sensor in der Dichtung die Fluidleitung bzw. das Rohr nicht vollständig umschließt und so bei unsymmetrischen Strömungsprofilen stark fehlerhaft misst.

In DE 10 2007 006 521 A1 ist eine Flachdichtung vorgestellt, in der auf einer Materiallage ein Dünnschicht-Sensor aufgebracht ist. Die Sensoren liegen von der Rohrdurchgangsöffnung weit entfernt und umschließen diese nicht. Daher entsteht zumindest ein für die Temperaturmessung beachtenswerter Messfehler.

Eine Dichtung mit integrierten Temperatursensoren ist aus WO 2015/147949 A1 bekannt. Die in die Flachdichtung eingelegten Sensoren messen punktuell und erfassen nur bei idealer Strömung, langer Messzeit und bei idealer äußerer Isolation der Messstelle die Temperatur richtig. Im anderen Fall entstehen Messfehler.

Ferner ist aus DE 20 2013 103 059 U1 ein thermoelektrisches Temperaturmessmodul zur Messung der Temperatur von in einer Rohrleitung strömenden Gasen und Flüssigkeiten bekannt, bei dem an einer Verbindungsstelle der Rohrleitung eine Messanordnung angeordnet ist, welche eine thermoelektrische Temperaturmessstelle enthält, die aus zwei metallischen Halbringen unterschiedlichen Materials besteht, welche an diametral gegenüberliegenden Stellen verbunden sind.

Grundsätzlich besitzen die oben genannten Anordnungen einen oder mehrere der nachfolgend aufgeführten Nachteile:
- die Anordnung ist bruch- und abrasionsempfindlich, insbesondere bei Medien mit Feststoffanteilen,
- die Anordnung ist nicht drucksicher,
- die Anordnung besitzt keinen ausreichenden oder nur sehr kostenintensiven Isolationsschutz,
- die Temperatur wird sehr ungenau gemessen und
- Strömungs- bzw. Füllgradverhältnisse im Rohr werden nur unzureichend beachtet oder diagnostiziert.

Der vorliegenden Erfindung liegt die Aufgabe zugrunde, eine Prozessdichtung der eingangs genannten Art und ein Verfahren zur Temperaturermittlung und Selbstdiagnose zu verbessern.

Insbesondere soll die Prozessdichtung so eingebaut werden können, dass keine Minderung der Dichtungseigenschaft eintritt. Weiterhin sollen eine Überwachung der Temperaturbelastung der Dichtung und eine Korrektur des statisch thermischen Messfehlers und/oder eine Kontrolle der Rohrfüllung möglich sein. Es sollen nur geringe Fehlereinflüsse durch Druckeinwirkung sowohl vom Medium als auch vom Befestigungsstatus (z.B. der Flanschbefestigung) bestehen und letztlich soll die Montagetechnologie kostengünstig gestaltbar sein.

Die Aufgabe wird durch eine Prozessdichtung gelöst, welche die in Anspruch 1 angegebenen Merkmale aufweist. Hinsichtlich des Verfahrens wird die Aufgabe mit einem Verfahren gelöst, welches die in Anspruch 18 angegebenen Merkmale aufweist.

Vorteilhafte Ausgestaltungen sind Gegenstand der Unteransprüche.

Die erfindungsgemäße thermoelektrische Prozessdichtung wird an einer Verbindungsstelle zweier Rohrleitungselemente, vorzugsweise zwischen zwei Flanschhälften, eingebaut.

Die Prozessdichtung verfügt über einen Dichtungsring, der sich zwischen einer Verbindung zweier Rohrleitungselemente einer Rohrleitung befindet, elektrisch leitende Strukturen aufweist, welche kreisförmig oder teilkreisförmig ausgebildet sind und aus einem ersten Thermomaterial a und einem zweiten Thermomaterial b besteht. Die elektrisch leitenden Strukturen bilden mindestens drei Thermopaare mit bekannter Temperatur-Spannungs-Abhängigkeit. Das erste Thermomaterial a und das zweite Thermomaterial b bilden mehrere Thermoknoten, welche in Umfangsrichtung am Dichtungsring angeordnet sind, wobei elektrische Anschlussleitungen der Thermoknoten in einem Anschlussbauteil nach außen geführt sind und in Parallel- Reihen- und/oder Differenzschaltungen elektrisch verbunden sind. Der Dichtungsring kann von einer Isolierschicht umgeben sein. Die Prozessdichtung kann bei Flanschdichtungen und bei Schraubverbindungen, wie z. B. Verbindungen mit Überwurfmutter, verwendet werden.

Die Prozessdichtung kann so in eine Verbindungsstelle eingebaut werden, dass keine Minderung der Dichtungseigenschaft eintritt. Weiterhin sind eine Überwachung der Temperaturbelastung der Dichtung und eine Korrektur des statisch thermischen Messfehlers und/oder eine Kontrolle der Rohrfüllung möglich. Es bestehen nur geringe Fehlereinflüsse durch Druckeinwirkung sowohl vom Medium als auch vom Befestigungsstatus (z.B. der Flanschbefestigung). Ferner wird eine kostengünstige Montagetechnologie ermöglicht.

Erfindungsgemäß weist der Dichtring elektrisch leitenden Strukturen auf, wobei ein Thermomaterial a oder b im inneren Scheibenbereich und das andere Thermomaterial b oder a im äußeren Scheibenbereich des Dichtungsrings angeordnet ist.

Es sind sowohl Ausführungen möglich, bei denen der innere Scheibenbereich mit dem Thermomaterial b geschlossen ist, als auch Ausführungen, bei denen der innere Scheibenbereich geteilt ist.

Eine vorteilhafte Ausführung sieht vor, dass drei Anschlüsse des äußeren Scheibenbereichs von drei Thermoknoten, die in nahezu gleichem Abstand an einer ersten Hälfte des Umfangs verteilt sind, und von diesen materialspezifische Verbindungen zu einem Anschlusselement im Anschlussbauteil geführt sind. In einer zweiten Hälfte des Dichtungsrings sind zwei weitere Thermoknoten angeordnet, wobei sich ein Thermoknoten im oberen Teil und der andere Thermoknoten im unteren Teil des Halbrings befinden und auch diese Thermoknoten mit Anschlussstellen im Anschlussbauteil verbunden sind.

Bei einer weiteren vorteilhaften Ausgestaltung ist der Leiter auf dem inneren Scheibenbereich geteilt. Dabei sind an einer Hälfte des inneren Scheibenbereichs drei Thermoknoten in nahezu gleichem Abstand am Umfang verteilt, die mit Anschlussstellen im Anschlussbauteil verbunden sind. An der gegenüberliegenden Hälfte des inneren Scheibenbereichs ist ein weiterer Thermoknoten unten im Scheibeninneren angeordnet. Die Thermomaterialien der unteren Thermoknoten sind mit Anschlussstellen im Anschlussbauteil verbunden.

Bei einer weiteren vorteilhaften Ausgestaltung sind die Anschlussleitungen von der Anschlussstelle zum äußeren und inneren Scheibenbereich, an denen Thermoknoten, welche zur Mittelwertbildung dienen, angeordnet sind, unterschiedlich breit gestaltet, wobei das Längen-Breiten-Verhältnis bei den drei Thermoknoten gleich ist, oder für die Leitungen von Anschlussstellen zu den zugehörigen Thermoknoten die Verhältnisse von mittleren Querschnitt der einzelnen Leitungen zu ihrer Länge proportional sind.

Ferner ist es möglich, dass der innere Scheibenbereich und der äußere Scheibenbereich jeweils aus zwei Halbringen bestehen, die sich im Bereich des Anschlussbauteils überlappen. Im Anschlussbauteil erfolgt hierbei eine elektrische Verschaltung der beiden thermoelektrischen Halbringe, so dass Thermoknoten auf einer Seite des Scheibenbereichs elektrisch parallel zu auf der anderen Seite des Scheibenbereichs angeordneten Thermoknoten (4.4, 4.5) verschaltet sind.

Eine weitere Ausführungsform sieht vor, dass der Dichtungsring aus einem elastischen Ring und einer in diesen eingefügten Trägerscheibe besteht, wobei auf der Trägerscheibe die elektrisch leitenden Strukturen angeordnet sind. Der elastische Ring befindet sich zwischen zwei Flanschteilen einer Rohrleitung, welche mit Hohlkehlen versehen sind, die mit der Oberfläche des elastischen Rings korrespondieren. Der elastische Ring besteht beispielsweise aus Silikon oder Viton. Er kann auf die Trägerscheibe aufgespritzt sein.

Flanschdichtungen mit elastischen Ringen werden vorzugsweise in der Lebensmittelindustrie verwendet.

Bei einer vorteilhaften Ausgestaltung besteht die Trägerscheibe aus dem zweiten thermischen Material b und im elastischen Ring befindet sich ein gebördelter Ring aus dem ersten thermischen Material a, in den die Trägerscheibe hineinragt.

Ferner ist es möglich, dass sich im elastischen Ring ein Scheibenmaterial aus dem ersten thermischen Material a befindet, welches mit der Trägerscheibe in Kontakt steht.

Bei weiteren vorteilhaften Ausführungen befindet sich im elastischen Ring mindestens ein isolierter Drahtring aus dem ersten thermischen Material a, der mit der Trägerscheibe an den Thermoknoten in Kontakt steht.

Es sind auch Ausführungen möglich, bei denen sich im elastischen Ring mehrere isolierte Drähte aus den beiden thermischen Materialien a und b befinden, die an versetzt angeordneten Thermoknoten mit der Trägerscheibe in Kontakt stehen.

Bei einer weiteren vorteilhaften Ausführung besteht die Trägerscheibe aus dem ersten thermischen Material a und weist innerhalb des elastischen Rings eine Mulde auf, in der mindestens ein Thermoleiter aus dem zweiten Thermomaterial b verläuft und an einer Stelle einen Thermoknoten mit dem Material a bildet.

Bei einer weiteren vorteilhaften Ausführung ist die Trägerscheibe mit einem elektrisch isolierenden Material umspritzt. Die Umspritzung weist im inneren Bereich eine wulstförmige Verdickung auf, welche den elastischen Dichtring bildet. Die Thermodrähte bilden an mehreren Stellen Thermoknoten, deren Anschlüsse nach außen geführt werden.

Ferner ist es möglich, dass der Dichtungsring in Form einer metallischen Hohlscheibe ausgebildet ist, welche aus einer oberen Teilscheibe und einer unteren Teilscheibe besteht, die durch einen Steg verbunden sind. In der Hohlscheibe sind thermoelektrische Strukturen angeordnet, die aus Mantelthermoelementen bestehen, wobei die Mantelthermoelemente an diskreten, beabstandeten Stellen an der Hohlscheibe angeheftet sind.

Bei einer weiteren vorteilhaften Ausführung besteht der Dichtring aus einem äußeren Trägerring aus niedrig wärmeleitenden Material und einem konzentrisch dazu angeordneten inneren Trägerring. Zwischen den Trägerringen verlaufen thermoelektrische Leitungen von Thermopaaren, deren Enden Thermoknoten bilden. Die Thermoknoten im inneren Trägerring befinden sich in Noppen, die in das Rohrinnere hineinragen. Die thermoelektrischen Leitungen der Thermopaare werden an einer Stelle am Umfang des Dichtrings gemeinsam nach außen geführt. Die thermoelektrischen Leitungen der Thermopaaren sind vorteilhaft als Mantelthermoelemente ausgebildet.

In den Noppen können metallische Stifte eingefügt sein, von denen ein Ende in das Innere des Rohrs ragt und das andere Ende in Kontakt zu einem Thermoknoten steht.

Bei dem erfindungsgemäßen Verfahren verfügt die Scheibe über mehrere Thermoknoten, mit denen ein Temperaturmittelwert an der inneren Rohrwandung und/oder eine Temperaturdifferenz zwischen Innenrohroberseite und Innenrohrunterseite sowie zur Außenwand ermittelt wird.

Bei einer vorteilhaften Ausgestaltung des Verfahrens wird der Temperaturmittelwert an der inneren Rohrwandung mit einer Parallelschaltung der Thermospannungen von drei Thermopaaren mit drei Thermoknoten ermittelt, wobei der Temperaturmittelwert an den Anschlussstellen A und B, die im Anschlussbauteil angeordnet sind, abgegriffen wird.

Eine weitere Ausgestaltung sieht vor, dass zur Ermittlung einer Temperaturdifferenz an der oberen und der unteren Seite des Rings die Thermospannungen von gegenüberliegenden Thermoknoten verglichen werden.

Weiterhin können an dem Dichtring an den elektrischen Anschlussstellen anliegende thermoelektrische Leiterenden in Parallel- und/oder Differenzschaltungen verknüpft werden, aus denen Informationen zu Parametern im Rohrinneren gewonnen werden. Dabei ergibt eine Parallelschaltung der Anschlussstellen B und C mit den Anschlussstellen B und D eine auf die Rohrhälfte mit zwei Thermoknoten bezogene Spannungssignalschaltung, während das Anschlusspaar A und B eine auf die andere Rohrhälfte mit drei Thermoknoten bezogenen Spannungssignalschaltung ergibt und insgesamt so ein Vergleich der beiden Spannungssignalmittelungen für die beiden Rohrhälften ermöglicht wird, wobei weiterhin das Anschlusspaar C und D eine Spannungsdifferenz bildet und diese ein Maß für die Differenz zwischen den Temperaturen an der Rohraußenfläche und im Rohrinneren darstellt.

Gemäß einer Ausgestaltung, die kein Teil der Erfindung ist, kann an einem Dichtring die Anschlussleitungen der in Differenz geschalteten Thermopaare Ti und Tu, die zu den Thermoknoten 4.i und 4.u gehören, zu den Anschlussstellen M und N im Anschlussbauteil führen und von diesen nach außen zu einem Elektronikbauteil mit einer Korrekturelektronik führen, wobei die Korrekturelektronik sowohl die an den Anschlussstellen A und B anliegende gemittelten Spannungssignale als auch das an den Anschlussstellen M und N anliegende Differenzspannungssignal erfasst und daraus ein Korrektursignal ermittelt wird. Statt der thermoelektrischen Differenzschaltung der Thermopaare Ti und Tu kann auch einen Signaldifferenz ermittelt werden, wenn Ti das innere Thermopaar bildet und statt des Thermopaars Tu ein Widerstandstemperaturfühler eingesetzt ist und die Signale von Ti und dem Widerstandstemperaturfühler als Differenzsignal ausgewertet werden.

Ausführungsbeispiele der Erfindung sowie Ausgestaltungen, die kein Teil der Erfindung sind, werden im Folgenden anhand von Zeichnungen näher erläutert.

Darin zeigen:
- Figur 1: eine Ausführung, bei der die innere Materialanordnung einen geschlossenen Ring bildet,
- Figur 2: eine Ausführung mit geteilter inneren Materialanordnung,
- Figur 3: eine Ausführung mit sich im Anschlussbereich überlappenden Scheibenthermoelementen,
- Figur 4A bis 4E: eine Ausführung mit einem elastischen Ring als Dichtung,
- Figur 5: eine Ausführung mit umspritzter Trägerscheibe,
- Figur 6: eine Ausführung mit elastischem Ring und Trägerscheibe mit vernetzten Thermodrähten,
- Figur 7: ein Schaltungsbeispiel der elektrischen Leiterstrukturen,
- Figur 8: eine Ausführung mit elastischem Ring und gelaserten Leiterstrukturen auf der Trägerscheibe,
- Figur 9: eine Ausführung, bei der der Dichtungsring als metallische Hohlscheibe ausgebildet ist,
- Figur 10: eine Ausführung mit konzentrisch angeordneten Trägerringen in einer Hohlscheibe
- und Figur 11: eine Ausführung mit Noppen am inneren Trägerring, in denen metallische Stifte angebracht sind.

Einander entsprechende Teile sind in allen Figuren mit den gleichen Bezugszeichen versehen.

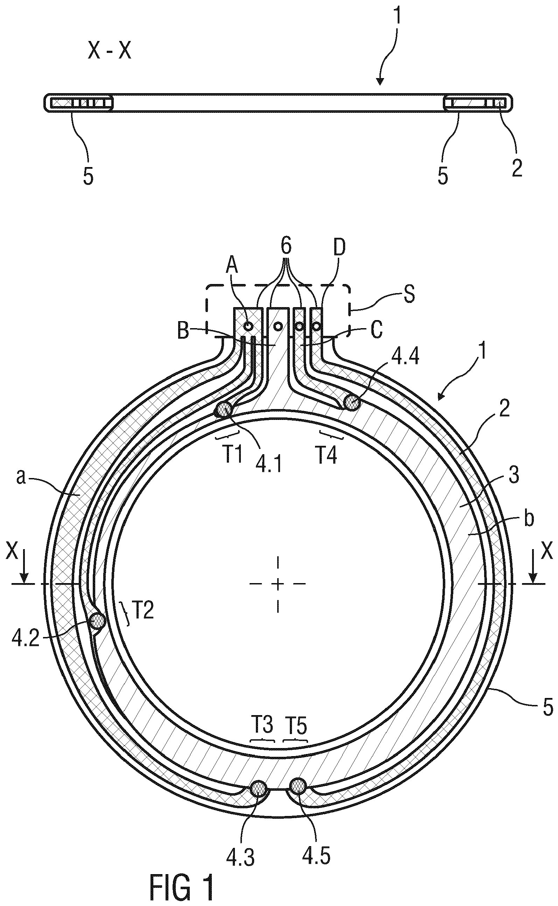

Gemäß **Figur** 1 weist die Flanschdichtung einen äußeren Scheibenbereich 2 mit dem Thermomaterial a und einen inneren Scheibenbereich 3 mit dem Thermomaterial b auf, welche Thermopaare mit bekannter Temperatur-Spannungs-Abhängigkeit bilden. Der innere Scheibenbereich 3 mit dem Thermomaterial b bildet in der hier dargestellten Ausführung einen vollständig geschlossenen Ring. Der äußere Scheibenbereich 2 mit dem Thermomaterial a besteht aus unterschiedlich langen ringförmigen Streifen, die an verschiedenen Stellen mit dem Thermomaterial b verbunden sind. Diese Verbindungen bilden die Thermoknoten 4.1 bis 4.5. Linksseitig sind drei Thermoknoten 4.1, 4.2 und 4.3 nahezu gleich am Umfang verteilt. Rechtsseitig befinden sich zwei Thermoknoten 4.4 und 4.5 oben und unten in der Rohrwandung bzw. im Scheibeninneren. Die Innenwiderstände der thermoelektrischen Sensorquellen sind gleich groß gestaltet, um eine genaue Mittelwertbildung zu erreichen. Hierzu sind die Breiten der Scheibenbereiche 2, 3, die jeweils gemeinsam eines der drei zu mittelnden Thermopaare T1, T2 und T3 bilden, unterschiedlich breit gestaltet. Das Längen-Breiten-Verhältnis sollte bei den drei Teilthermopaaren T1, T2, T3 gleich sein, so dass sich jeweils gleiche Widerstände in den Teilthermokreisen einstellen.

Die Scheibenanordnung ist mit einer Isolierschicht 5 versehen. Im Anschlussbauteil S werden die elektrischen Anschlussleitungen 6 elektrisch weitergeführt zu einer Auswerteelektronik oder zu einer Transmitteranordnung. Nach der Isolierung der Scheibenanordnung mit einem als Isolierschicht 5 ausgeführten Schichtüberzug kann diese in eine metallische Dichtungsfassung einmontiert werden. Eine derartige Ausführung ist insbesondere für Hochdruckanlagen geeignet.

Grundsätzlich ist auch eine Erhöhung der Anzahl der Thermoknoten 4.1, 4.2, 4.3 in der linksseitigen Thermoelementanordnung möglich.

Die elektrischen Anschlüsse von drei Thermoknoten 4.1, 4.2, 4.3 werden im Anschlussbauteil S elektrisch so zusammengeführt, dass eine Parallelschaltung entsteht. In diesem Fall stellt die Thermospannung der Parallelschaltung den Mittelwert der an den drei Thermoknoten 4.1, 4.2, 4.3 ermittelten Temperaturen dar.

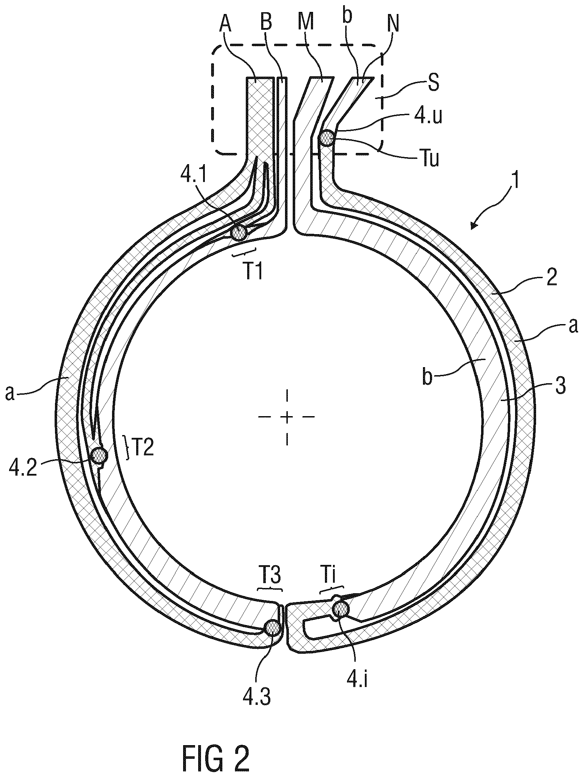

Wie aus **Figur 2** ersichtlich ist, kann, in einer Ausgestaltung, die kein Teil der Erfindung ist, die einteilige Leiteranordnung gemäß Figur 1 auch zweiteilig ausgeführt werden. In diesem Fall geht der geschlossene Scheibenbereich im Inneren verloren, jedoch ist eine zweiteilige Anordnung günstiger in eine metallische Dichtungsfassung einzumontieren. Die Zweiteilung wird durch Auftrennung elektrischer Strukturen auf der Scheibe an der dem Anschlussbauteil S gegenüberliegenden Seite erreicht.

Die Scheibenanordnung weist linksseitig eine thermoelektrische Anordnung gemäß der in Figur 1 gezeigten Ausführung auf. Die rechtsseitige Anordnung weist eine thermoelektrische Differenzanordnung auf, wobei ein Thermoknoten 4.i (z.B. an der Scheibenunterseite) dicht an der Innenseite der Scheibe angeordnet ist und der zweite Thermoknoten 4.u sich im Anschlussbereich, der die Umgebungstemperatur Tᵤ aufweist, befindet. Die Differenzanordnung misst die Temperaturdifferenz zwischen den beiden Thermoknoten 4.i und 4.u, d.h. die Temperaturdifferenz Tᵢ - Tᵤ (Temperaturdifferenz zwischen Innentemperatur Tᵢ und Umgebungstemperatur Tᵤ). Statt des Thermoknotens 4.u des Thermopaares Tᵤ kann auch ein Widerstandstemperaturfühler eingesetzt werden und die Signaldifferenz von 4.i und dem Widerstandstemperaturfühler gebildet werden. Diese Temperaturdifferenz ist ursächlich für den bei Scheibenthermoelementen entstehenden statisch-thermischen Messfehler. Über einen separat zu ermittelnden Korrekturfaktor K kann dieser statisch-thermische Messfehler näherungsweise korrigiert werden. Stellt T_{K} den korrigierten Messwert dar, so erhält man diesen auf der Basis der vorliegenden Messwerte T₁, T₂ und T₃ aus der Beziehung T_{M} = (T₁ + T₂ + T₃) / 3 sowie (Tᵢ - T_{U}) gemäß T_{K} = T_{M} + K (Tᵢ - T_{U}), z.B. mit K =0,1.

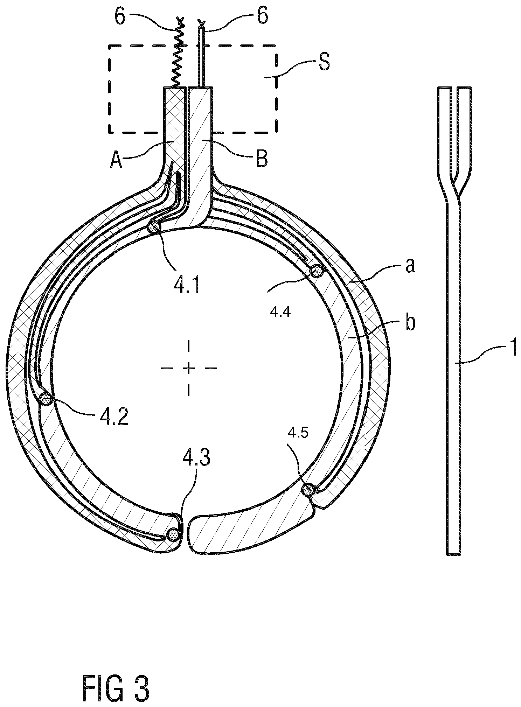

Das in **Figur** 3 dargestellte Scheibenthermoelement besteht aus zwei Teilen, die sich im Bereich des Anschlussbauteils S überlappen. Im Anschlussbauteil S erfolgt eine elektrische Verschaltung der beiden thermoelektrischen Halbringe, so dass die linksseitige Thermopaarschaltung elektrisch parallel zur rechtsseitigen Thermopaarschaltung liegt.

Da die Thermopaarschaltungen der jeweiligen Thermopaare auch parallel erfolgen, d.h. drei parallele linke Thermopaare und zwei parallele rechte Thermopaare, entsteht eine Parallelgesamtschaltung und es wird rund um den Innendurchmesser die Temperatur gemittelt.

Es ist jedoch auch möglich, die linke und die rechte Thermopaar-Anordnung getrennt auszuwerten, so dass eventuell waagerechte bzw. seitliche Temperaturgefälle im Rohr erkannt werden können.

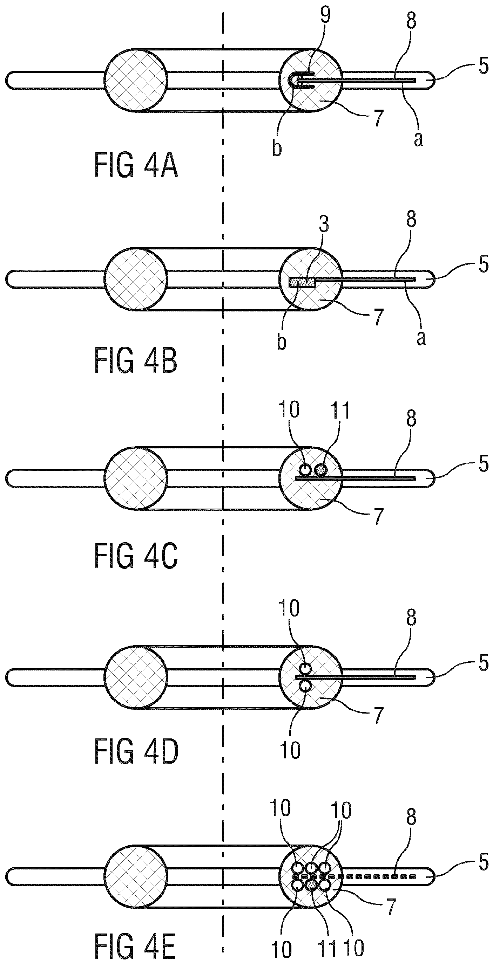

In **Figur 4** ist eine Ausführung dargestellt, bei der als dichtendes Element ein elastischer Dichtring 7 verwendet wird. Der elastische Dichtring 7 besitzt einen runden Querschnitt. Die hier nicht dargestellten Flanschteile, zwischen denen sich der elastische Dichtring 7 befindet, sind hierbei mit Hohlkehlen versehen, die der Form des elastischen Rings 7 angepasst sind. Derartige Ausführungen sind beispielsweise in der Nahrungsmittelindustrie üblich.

Bei der Ausführung gemäß **Figur 4A** ist in dem elastischen Dichtring 7 eine ringförmige Trägerscheibe 8 angebracht. Die Trägerscheibe 8 besteht aus dem thermoelektrischen Material a und ist mehrfach geschlitzt. An diskreten Stellen steht sie in Kontakt mit einem geschlossenen, gebördelten Ring 9 aus dem Thermomaterial b, wobei an diesen Stellen hier nicht dargestellte Thermoknoten 4 gebildet werden. Der gebördelte Ring 9 befindet sich innerhalb des elastischen Rings 7 und die Trägerscheibe 8 ragt mit ihrem Innenteil in den elastischen Ring 7 hinein. Die Trägerscheibe 8 ist von einer Isolierschicht 5 umgeben.

Bei der Ausführung gemäß **Figur 4B** befindet sich im Inneren des elastischen Rings 7 der innere Ring 3, der die Trägerscheibe 8 aus dem Material a an mehreren Stellen berührt. Der innere Ring 3 und die Trägerscheibe 8 sind mittels Punktschweißungen verbunden, wobei die Verbindungsstellen Thermoknoten 4 bilden.

Bei der Ausführung gemäß **Figur 4C** befinden sich im elastischen Ring 7 mehrfach Thermodrähte 10 aus dem ersten thermoelektrischen Material a, die mit einer Trägerscheibe 8 aus dem thermoelektrischen Material b an verschiedenen Stellen in Kontakt stehen. Es ist auch möglich, auf der Trägerscheibe 8 Mantelthermoleitungen mit inneren Thermodrähten 10 aus dem Thermomaterial a und Thermodrähten 11 aus dem Thermomaterial b anzubringen, deren Enden verschweißt sind und hier nicht dargestellte Thermoknoten 4 bilden.

Bei der Ausführung gemäß **Figur 4D** sind wie bei der Ausführung nach Figur 4C auf der Trägerscheibe 8 Thermodrähte 10 aus dem ersten Thermomaterial a angeordnet. Zusätzlich sind hier noch auf der Unterseite der Trägerscheibe 8 weitere Thermodrähte 10 aus dem ersten Thermomaterial a angeordnet und an mehreren Stellen an der Trägerscheibe 8 angepunktet. Auch hier können auf der Trägerscheibe 8 Mantelthermoleitungen mit inneren Thermodrähten aus den Thermomaterialien a und b angebracht sein.

Bei der Ausführung gemäß **Figur 4E** sind im Inneren des elastischen Rings 7 auf der Trägerscheibe 8 mehrere Thermodrähte 10 aus dem ersten Thermomaterial a angeordnet. Zusätzlich sind hier noch an einer Seite der Trägerscheibe 8 Thermodrähte 11 aus dem zweiten Thermomaterial b angeordnet. Die Thermodrähte 10 sind mit Thermodrähten 11 an mehreren Stellen verbunden und bilden Thermoknoten 4.

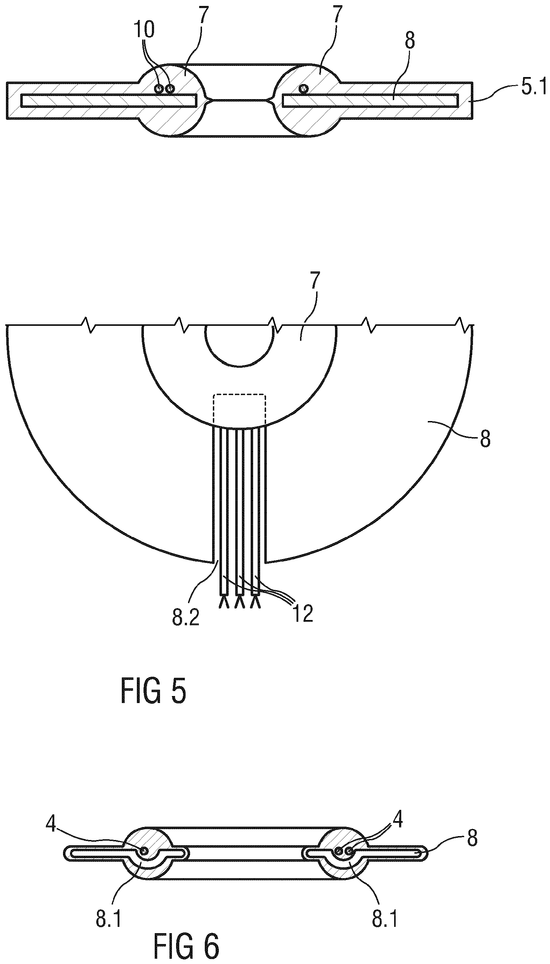

**Figur 5** erläutert eine Ausführungsform, bei der die Trägerscheibe 8 eine Umspritzung 5.1 aus einem elastischen, elektrisch isolierenden Material aufweist.

Vorzugsweise wird hierzu ein Elastopolymer verwendet. Auf der Trägerscheibe 8 sind Thermodrähte fixiert, welche auf der Trägerscheibe 8 verlaufen. Im inneren Bereich der Scheibe 8 bildet die Umspritzung 5.1 eine wulstförmige Verdickung, die den elastischen Dichtring 7 bildet. Die Thermodrähte bilden an mehreren Stellen Thermoknoten 4, deren Anschlüsse als Mantelthermoelemente 12 in einem radialen Schlitz 8.2 nach außen geführt werden.

In **Figur 6** ist eine Ausführungsform dargestellt, bei der die Trägerscheibe 8 durch den elastischen Dichtring 7 hindurchgeführt ist und beidseitig übersteht. Die Trägerscheibe 8 weist einen Bereich mit einer ringförmigen Muldenprägung 8.1 auf, welche sich innerhalb des elastischen Rings 7 befindet. In der Muldenprägung 8.1 verlaufen Thermoleiter aus dem ersten Thermomaterial a und dem zweiten Thermomaterial b, welche Thermoknoten 4 bilden. Die Thermoleiter können mit einer gut wärmeleitenden Verguss- und Klebemasse fixiert sein. Die Trägerscheibe 8 weist an einer Stelle einen radialen Schlitz 8.2 auf, durch den die eingebetteten Thermoleiter nach außen geführt werden.

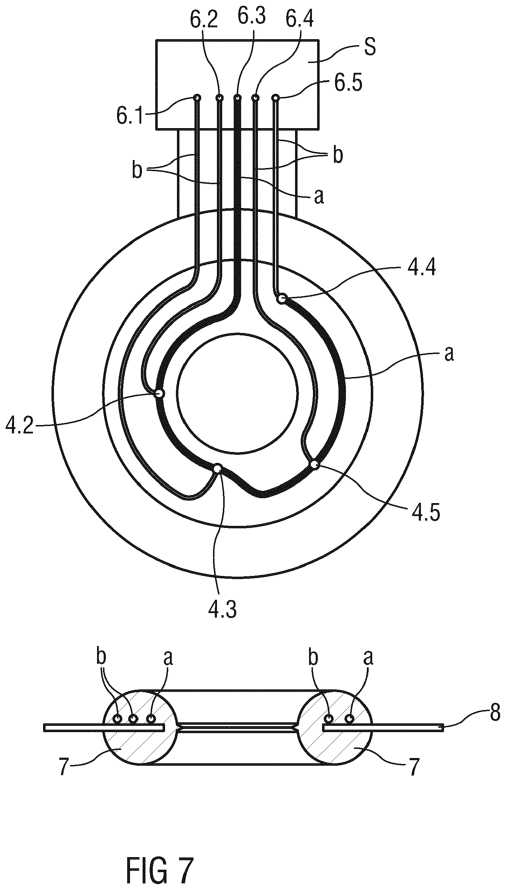

**Figur 7** zeigt eine auf der Trägerscheibe 8 angeordnete elektrische Leiterstruktur aus vernetzten Thermodrähten.

Aus der in der oberen Ansicht dargestellten Draufsicht ist die Verschaltung der elektrischen Leiter ersichtlich. Die auf der Trägerscheibe 8 angebrachten Leiter werden mittels elektrischer Anschlussleitungen 6 zum Anschlussbauteil S geführt. Vom Anschlusspunkt 6.3 führt eine Leitung zum inneren Ringbereich der Trägerscheibe 8. Diese Leitung besteht aus dem Thermomaterial a und ist an vier Punkten mit Leitungen aus dem Thermomaterial b verbunden. Diese vier Leitungen werden an die Anschlusspunkte 6.1, 6.2, 6.4 und 6.5 im Anschlussbauteil S geführt. An den Anschlusspunkten 6.4 und 6.5 kann die Temperaturdifferenz an den Thermoknoten 4.4 und 4.5 ermittelt werden, welche den Temperaturunterschied zwischen dem oberen und dem unteren Bereich der Prozessdichtung entspricht.

In der unteren Ansicht ist die Anordnung im Schnitt dargestellt.

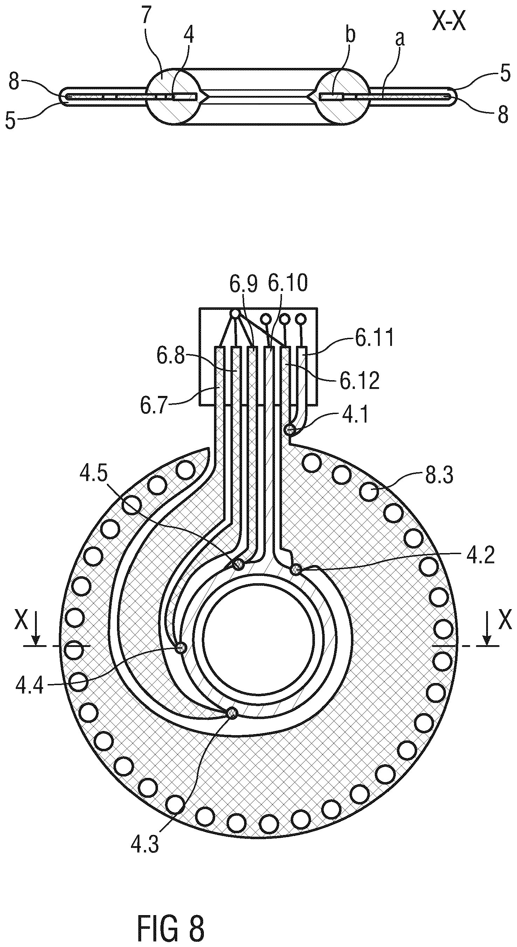

In **Figur 8** ist eine Ausführung mit elastischem Dichtring 7 und ebenen Leiterstrukturen auf der Trägerscheibe 8 dargestellt.

Die obere Ansicht zeigt die Anordnung im Schnitt, in der unteren Ansicht ist eine Draufsicht auf die flächenhaften Leiterstrukturen auf der Trägerscheibe 8 dargestellt.

Der Dichtungsring 1 besteht aus der in einem elastischen Dichtring 7 befestigten Trägerscheibe 8, auf der elektrisch leitende Schichten aufgebracht sind. Am äußeren Rand der Trägerscheibe 8 befindet sich der äußere Scheibenbereich 2 aus dem Thermomaterial a. Von diesem Scheibenbereich 2 führt eine Anschlussleitung 6 zu einem Anschlusspunkt 6.11 im Anschlussbauteil S. Die zum Anschlusspunkt 6.11 führende Leitung ist am äußeren Rand der Trägerscheibe 8 mit einem Leiterstück aus dem Thermomaterial b verbunden, welches zum Anschlusspunkt 6.12 führt. Die Verbindungsstelle bildet ein Thermopaar, mit dem die außen an der Trägerscheibe 8 bestehende Temperatur erfasst werden kann. Am inneren Rand der Trägerscheibe 8 befindet sich der innere Scheibenbereich 3 aus dem Thermomaterial b. Der innere Scheibenbereich 3 ist mit einem Leiterstück verbunden, der zu einem Anschlusspunkt 6.10 führt. Der äußere Scheibenbereich 2 ist an vier Punkten mit dem inneren Scheibenbereich 3 verbunden, die am Umfang gleichmäßig verteilt sind. Die Verbindungspunkte werden mit gegeneinander elektrisch isolierten Leiterstücken zu den Anschlusspunkten 6.7, 6.8, 6.9 und 6.11 geführt. Diese Verbindungsstellen bilden jeweils Thermopaare Ti. Zur Verminderung des Wärmetransports können an der Trägerscheibe 8 Bohrungen 8.3 angebracht sein. An den elektrischen Anschlussstellen 6.11 und 6.12 kann die Temperatur am Anschlussbereich ermittelt werden. Aus dem Wert an der Parallelschaltung der Anschlussstellen 6.7, 6.8, 6.9, 6.11gegenüber dem Wert an der Anschlussstelle 6.10 kann der Temperaturmittelwert bestimmt werden.

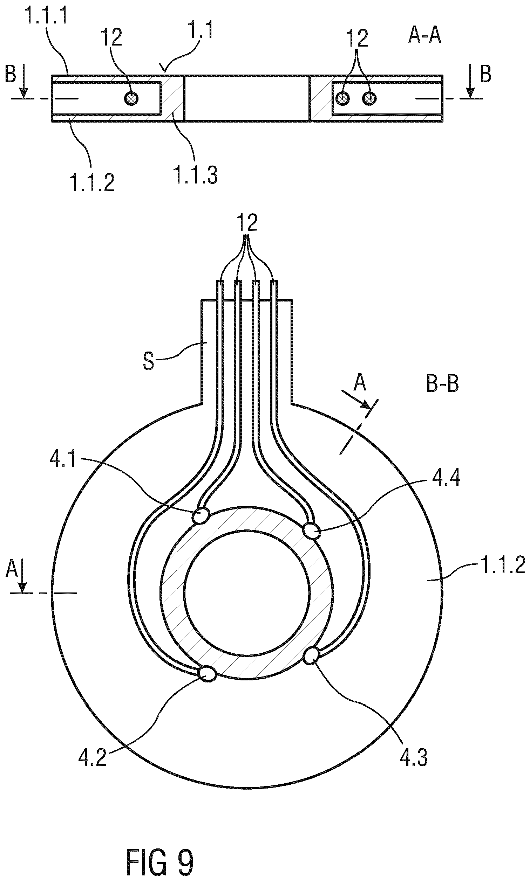

In **Figur** 9 ist eine Ausführungsform dargestellt, bei welcher der Dichtungsring 1 als metallische Hohlscheibe 1.1 ausgebildet ist. Die Hohlscheibe 1.1 besteht aus einer oberen Teilscheibe 1.1.1 und einer unteren Teilscheibe 1.1.2, die durch einen ringförmigen Steg 1.1.3 verbunden sind. Die thermoelektrischen Verbindungsleitungen bestehen hier aus Mantelthermoelementen 12. Sie enthalten im Inneren in isolierendem Pulver geführte Thermodrähte. Die Thermodrähte sind an ihren Enden verschweißt und bilden Thermoknoten 4.1 bis 4.4, welche auf einer Kreislinie in etwa gleichen Abständen isoliert angeordnet sind.

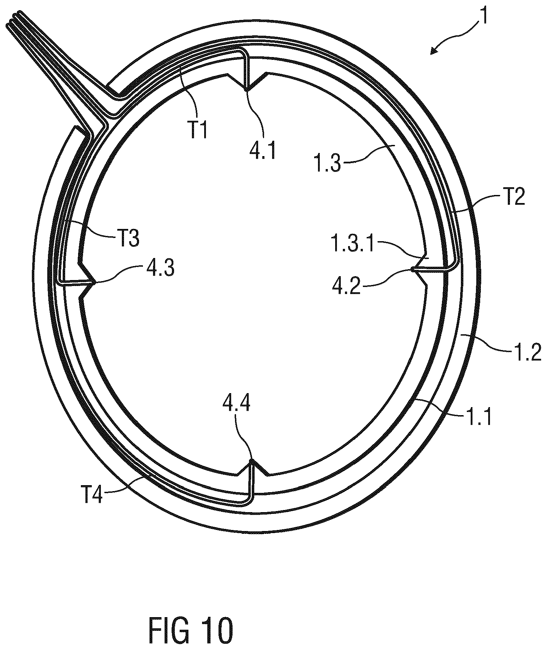

**Figur 10** zeigt eine Ausführungsform, bei der der Dichtungsring 1 aus einer metallischen Hohlscheibe 1.1 besteht, in der sich ein äußerer Trägerring 1.2 aus niedrig wärmeleitenden Material und ein konzentrisch dazu angeordneter inneren Trägerring 1.3 befinden. Zwischen den beiden Trägerringen 1.2 und 1.3 verlaufen in einem inneren Hohlraum Thermopaare T1 bis T4, deren Enden Thermoknoten 4.1 bis 4.4 bilden. Die Thermopaare T1 bis T4 sind als Mantelthermoelemente 12 ausgeführt. Die Thermoknoten 4.1 bis 4.4 sind im Inneren der Hohlscheibe 1.1 in Noppen 1.3.1 angeordnet, welche in das Rohrinnere hineinragen oder sie sind in Sackbohrungen angeordnet. Die Thermopaare T1 bisT4 werden an einer Stelle am Umfang des Dichtungsrings 1 gemeinsam nach außen geführt.

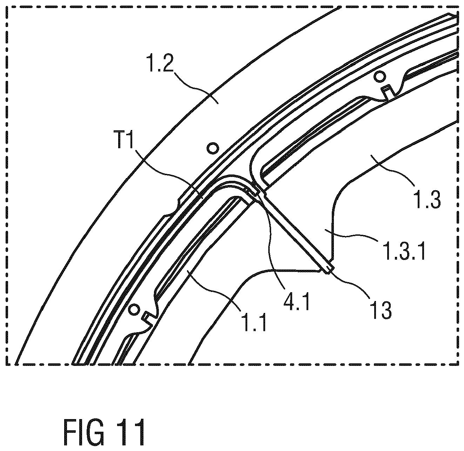

In **Figur** 11 ist eine Variante der in Figur 10 gezeigten Ausführungsform dargestellt. Hier befinden sich in den Noppen 1.3.1 metallische Stifte 13, die mit einem Ende in das Rohrinnere oder in Sackbohrungen hineinragen. Das andere Ende ist mit dem Thermoknoten 4.1 elektrisch leitend verbunden. Die metallischen Stifte 13 bestehen vorzugsweise aus einem gut wärmeleitenden Stahl, während die metallische Hohlscheibe 1.1 aus einem schlecht wärmeleitendem Material besteht.

### BEZUGSZEICHENLISTE

- 1: Dichtungsring
- 1.1: metallische Hohlscheibe
- 1.1.1: obere Teilscheibe
- 1.1.2: untere Teilscheibe
- 1.1.3: Steg
- 1.2: äußerer Trägerring
- 1.3: innerer Trägerring
- 1.3.1: Noppen
- 2: äußerer Scheibenbereich
- 3: innerer Scheibenbereich
- 4, 4.1...4.5, 4.i, 4.u: Thermoknoten
- 5: Isolierschicht
- 5.1: Umspritzung
- 6: elektrische Anschlussleitungen
- 6.1 ... 6.12: elektrische Anschlussstellen
- 7: elastischer Dichtring
- 8: Trägerscheibe
- 8.1: Muldenprägung
- 8.2: radialer Schlitz
- 8.3: Bohrungen
- 9: gebördelter Ring
- 10: Thermodrahtring aus ersten Thermomaterial a
- 11: Thermodrahtring aus zweiten Thermomaterial b
- 12: Mantelthermoelement
- 13: metallischer Stift
- a: erstes Thermomaterial
- b: zweites Thermomaterial
- A, B: elektrische Anschlussstelle für Temperaturmittelwert
- C, D: elektrische Anschlussstelle für rechtsseitige Temperaturdifferenzwerte
- M, N: elektrische Anschlussstelle für Temperaturdifferenzmessung (Tᵢ - Tᵤ)=T_{D}
- T1... T5, Ti, Tu: Thermopaare
- T_{M}: Medientemperatur gemittelt
- Tᵢ: Innentemperatur
- Tᵤ: Umgebungstemperatur
- T_{K}: korrigierte Messtemperatur
- T_{D}: Differenztemperatur zwischen Tᵤ und Tᵢ
- K: Korrekturfaktor
- S: Anschlussbauteil

## Patentansprüche

1. Prozessdichtung mit integrierten Thermoknoten (4.1 bis 4.5) zur Temperaturermittlung und Selbstdiagnose für Verbindungen von Rohrleitungselementen, welche thermoelektrische Strukturen in einer Ebene aufweist, die mehrfach unsymmetrisch kreisförmig oder teilkreisförmig ausgebildet sind und aus einem ersten Thermomaterial (a) in einem äußeren Scheibenbereich (2) des Dichtungsrings (1) und einem zweiten Thermomaterial (b) in einem inneren Scheibenbereich (3) des Dichtungsrings (1) bestehen, wobei die thermoelektrischen Strukturen mindestens drei Thermopaare (T1...T5) mit bekannter Temperatur-Spannungs-Abhängigkeit bilden, wobei
- das erste Thermomaterial (a) und das zweite Thermomaterial (b) mehrere Thermoknoten (4) bilden, welche in Umfangsrichtung des Dichtungsrings (1) angeordnet sind, wobei
- elektrische Anschlussleitungen (6) von den Thermoknoten (4) zu einem Anschlussbauteil (S) am Außenrand des Dichtungsrings (1) und von diesem nach außen geführt sind und in Parallel-, Reihen und/oder Differenzschaltungen elektrisch verbunden sind, und dort kombinierte thermoelektrische Spannungssignale ergeben, die zur Temperaturmessung und/oder Fehlerkorrektur und/oder Selbstdiagnose verwendet werden, **dadurch gekennzeichnet, dass** vom äußeren Scheibenbereich (2) Anschlüsse von
den Thermoknoten (4.1, 4.2, 4.3), die in nahezu gleichem Abstand voneinander an einer ersten Hälfte des Umfangs vom inneren Scheibenbereich (3) verteilt sind, zu einer Anschlussstelle (A) im Anschlussbauteil (S) geführt sind, der innere Scheibenbereich (3) mit dem Thermomaterial (b) als gemeinsamer thermoelektrischer Leiter mit einer Anschlussstelle (B) im Anschlussbauteil (S) verbunden ist, von einem weiteren Thermoknoten (4.4) ein Leiterstück aus dem ersten Thermomaterial (a) an eine Anschlussstelle (C) im Anschlussbauteil (S) geführt ist und in einer zweiten Hälfte des Umfangs vom inneren Scheibenbereich (3) ein Teil des äußeren Scheibenbereichs (2) mit einem dem weiteren Thermoknoten (4.4) gegenüberliegenden Thermoknoten (4.5) mit einer Anschlussstelle (D) im Anschlussbauteil (S) verbunden ist.

2. Prozessdichtung nach Anspruch 1, **dadurch gekennzeichnet, dass** die thermoelektrischen Strukturen durch schlitzförmige Einschnitte am Dichtungsring (1) zu Anschlussleitungen (6) ausgebildet sind.

3. Prozessdichtung nach einem der Ansprüche 1 oder 2, **dadurch gekennzeichnet, dass** die Scheibenbereiche (2, 3), an denen drei Thermoknoten (4.1, 4.2, 4.3) zur Temperaturmittelwertbildung angeordnet sind, unterschiedlich breit gestaltet sind, wobei das Längen-Breiten-Verhältnis bei den drei Thermoknoten (4.1, 4.2, 4.3) gleich ist.

4. Prozessdichtung nach einem der Ansprüche 1 bis 3, **dadurch gekennzeichnet, dass** der innere Scheibenbereich (3) und der äußere Scheibenbereich (2) jeweils aus zwei thermoelektrischen Halbringen bestehen, die sich im Bereich des Anschlussbauteils (S) überlappen, wobei im Anschlussbauteil (S) eine thermoelektrische Verschaltung der beiden thermoelektrischen Halbringe erfolgt, so dass Thermoknoten (4.1, 4.2, 4.3) auf einer Seite des Scheibenbereichs (2, 3) elektrisch parallel zu auf der anderen Seite des Scheibenbereichs (3, 2) angeordneten Thermoknoten (4.4, 4.5) verschaltet sind.

5. Prozessdichtung nach Anspruch 1, **dadurch gekennzeichnet, dass** die Prozessdichtung aus einem elastischen Ring (7) und eine in diesen eingefügte Trägerscheibe (8) besteht, wobei auf der Trägerscheibe (8) thermoelektrische Strukturen angeordnet sind, die sich oberhalb oder innerhalb des elastischen Rings (7) befinden und der elastische Ring (7) sich im eingebauten Zustand zwischen zwei Rohrleitungselementen befindet, welche mit Hohlkehlen versehen sind, die mit der Oberfläche des elastischen Rings (7) korrespondieren.

6. Prozessdichtung nach Anspruch 5, **dadurch gekennzeichnet, dass** di, Prozessdichtung weiterhin einen geschlossenen gebördelten Ring (9) umfasst, wobei die Trägerscheibe (8) aus dem thermoelektrischen Material (a) besteht, mehrfach geschlitzt ist und an diskreten Stellen in Form von Thermoknoten (4) mit dem geschlossenen gebördelten Ring (9) aus dem Thermomaterial (b) verbunden ist, wobei der gebördelte Ring (9) sich innerhalb des elastischen Rings (7) befindet und die Trägerscheibe (8) mit ihrem Innenteil in den elastischen Ring (7) hineinragt.

7. Prozessdichtung nach Anspruch 5, **dadurch gekennzeichnet, dass** die Trägerscheibe (8) aus dem zweiten thermischen Material (b) besteht und im elastischen Ring (7) ein Ring (9) aus dem ersten thermischen Material (a) angeordnet ist, in den die Trägerscheibe (8) hineinragt.

8. Prozessdichtung nach einem der Ansprüche 1 bis 7, **dadurch gekennzeichnet, dass** die elektrischen Anschlussleitungen (6), die von Thermoknoten (4) zu Anschlussstellen (A, B) führen, jeweils ein etwa gleiches Verhältnis von Querschnittsfläche zu Leitungslänge aufweisen.

9. Prozessdichtung nach Anspruch 5, **dadurch gekennzeichnet, dass** sich im elastischen Ring (7) mehrfach Thermodrähte (10) aus dem ersten thermoelektrischen Material (a) befinden, die mit der Trägerscheibe (8) aus dem zweiten thermoelektrischen Material (b) in Kontakt stehen.

10. Prozessdichtung nach Anspruch 5, **dadurch gekennzeichnet, dass** sich im elastischen Ring (7) mehrere Thermodrähte (10, 11) aus den beiden thermoelektrischen Materialien (a, b) befinden, die auf der Trägerscheibe (8) mechanisch fixiert sind.

11. Prozessdichtung nach Anspruch 5, **dadurch gekennzeichnet, dass** die Trägerscheibe (8) aus dem zweiten thermoelektrischen Material (b) besteht und im elastischen Ring (7) eine Mulde aufweist, in welcher Thermoleiter aus dem ersten Thermomaterial (a) verlaufen und in Abständen mit der Trägerscheibe (8) durch Thermoknoten (4) verbunden sind.

12. Prozessdichtung nach Anspruch 10, **dadurch gekennzeichnet, dass** die Trägerscheibe (8) eine Umspritzung (5.1) aus einem elektrisch isolierenden Material aufweist, die im inneren Bereich eine wulstförmige Verdickung aufweist, welche den elastischen Dichtring (7) bildet, wobei die Thermodrähte (10, 11) an mehreren Stellen Thermoknoten (4) bilden, deren Anschlüsse nach außen geführt werden.

13. Prozessdichtung nach Anspruch 1, **dadurch gekennzeichnet, dass** der Dichtungsring (1) als metallische Hohlscheibe (1.1) ausgebildet ist, welche aus einer oberen Teilscheibe (1.1.1) und einer unteren Teilscheibe (1.1.2) besteht, die durch einen Steg (1.1.3) verbunden sind, in der thermoelektrische Strukturen angeordnet sind, die aus Mantelthermoelementen (12) bestehen, wobei die Mantelthermoelemente (12) an diskreten, beabstandeten Stellen an der Hohlscheibe (1.1) angeheftet sind.

14. Prozessdichtung nach Anspruch 13, **dadurch gekennzeichnet, dass** die Verhältnisse von Leiterquerschnitt zu Leiterlänge der Innenleiter der Mantelthermoelemente (12), die von den Anschlussstellen (6) zu den jeweiligen Thermoknoten (4) führen, nahezu gleich sind.

15. Prozessdichtung nach Anspruch 14, **dadurch gekennzeichnet, dass** in der Hohlscheibe (1.1) ein äußerer Trägerring (1.2) aus niedrig wärmeleitenden Material und ein konzentrisch dazu angeordneter innerer Trägerring (1.3) angeordnet sind, zwischen denen Thermopaare (T1...T5) verlaufen, deren Enden Thermoknoten (4.1...4.5) (4.1 ... 4.4)bilden, wobei die Thermoknoten (4.1...4.5) (4.1 ... im Steg (1.1.3) in Noppen (1.3.1) angeordnet sind, die in das Rohrinnere hineinragen und wobei die Thermopaare (T1...T5) an einer Stelle am Umfang des Dichtrings (1) gemeinsam nach außen geführt werden.

16. Prozessdichtung nach Anspruch 14 oder 15, **dadurch gekennzeichnet, dass** die Thermopaare (T1...T5) als Mantelthermoelemente (12) ausgebildet sind.

17. Prozessdichtung nach Anspruch 15 oder 16, **dadurch gekennzeichnet, dass** in den Noppen (1.3.1) metallische Stifte (13) mit guter Wärmeleitfähigkeit eingefügt sind, von denen im eingebauten Zustand ein Ende in das Innere der Rohrleitung ragt und das andere Ende in Kontakt zu einem Thermoknoten (4.1...4.5) steht oder in den Noppen (1.3.1) Sackbohrungen angeordnet sind, in die die Mantelthermoelemente (12) und/oder die metallischen Stifte (13) hineinragen.

18. Verfahren zur Temperaturermittlung und Selbstdiagnose an einer Prozessdichtung gemäß einem der Ansprüche 1 bis 17, **dadurch gekennzeichnet, dass** der Dichtungsring (1) über mehrere Thermoknoten (4.1 bis 4.5) verfügt, mit denen im eingebauten Zustand ein Temperaturmittelwert an der inneren Rohrwandung und/oder eine Temperaturdifferenz zwischen Innenrohroberseite und Innenrohrunterseite sowie zur Außenwand ermittelt wird.

19. Verfahren nach Anspruch 18, **dadurch gekennzeichnet, dass** im eingebauten Zustand der Temperaturmittelwert an der inneren Rohrwandung mit einer Parallelschaltung der Thermospannungen von mindestens drei Thermopaaren (T) mit den Thermoknoten (4.1, 4.2, 4.3) ermittelt wird, wobei der Temperaturmittelwert an Anschlussstellen (A, B) abgenommen wird, die im Anschlussbauteil (S) angeordnet sind.

20. Verfahren nach Anspruch 18, **dadurch gekennzeichnet, dass** zur Ermittlung einer Temperaturdifferenz an der oberen und der unteren Seite des Dichtungsrings (1) die Thermospannungen von gegenüberliegenden Thermoknoten (4.1 und 4.5) verglichen werden.

21. Verfahren nach Anspruch 18, **dadurch gekennzeichnet, dass** an einem Dichtungsring (1) gemäß Anspruch 5 an den elektrischen Anschlussstellen (A, B, C, D) anliegende thermoelektrische Leiterenden in Parallel- und/oder Differenzschaltungen verknüpft sind, aus denen im eingebauten Zustand Informationen zu Parametern im Rohrinneren gewonnen werden, wobei eine Parallelschaltung der Anschlussstellen (B, C) mit den Anschlussstellen (B, D) eine auf die Rohrhälfte mit den Thermoknoten (4.4 und 4.5) bezogene Spannungssignalschaltung ergibt, während das Anschlusspaar (A, B) eine auf die Rohrhälfte mit den Thermoknoten (4.1, 4.2, 4.3) bezogenen Spannungssignalschaltung ergibt und insgesamt so ein Vergleich der beiden Spannungssignalmittelungen für die beiden Rohrhälften ermöglicht wird, wobei weiterhin das Anschlusspaar (C, D) eine Spannungsdifferenz bildet und diese ein Maß für die Differenz zwischen den Temperaturen an der Rohraußenfläche und im Rohrinneren darstellt.

## Claims

1. Process seal with integrated thermal nodes (4.1 to 4.5) for determining temperature and self-diagnosis for connections of pipeline elements which have thermoelectric structures in one plane which are formed in a multiply unsymmetrically circular or part-circular manner and consist of a first thermal material (a) in an outer disc region (2) of the sealing ring (1) and a second thermal material (b) in an inner disc region (3) of the sealing ring (1), wherein the thermoelectric structures form at least three thermopairs (T1...T5) with known temperature-voltage dependence, wherein
- the first thermal material (a) and the second thermal material (b) form multiple thermal nodes (4), which are arranged in the circumferential direction of the sealing ring (1), wherein
- electrical connection lines (6) are led from the thermal nodes (4) to a connection component (S) at the outer edge of the sealing ring (1) and from the latter to the outside and are electrically connected in parallel, series and/or differential connections, and produce combined thermoelectric voltage signals there, which are used for temperature measurement and/or error correction and/or self-diagnosis, **characterized in that**, from the outer disc region (2), connections of the thermal nodes (4.1, 4.2, 4.3), which are distributed in almost equal spacing from one another on a first half of the circumference of the inner disc region (3), are led to a connection point (A) in the connection component (S), the inner disc region (3) with the thermal material (b) is connected as a common thermoelectric conductor to a connection point (B) in the connection component (S), from a further thermal node (4.4) a piece of conductor of the first thermal material (a) is led to a connection point (C) in the connection component (S) and, in a second half of the circumference of the inner disc region (3), a part of the outer disc region (3) with a thermal node (4.5) opposite the further thermal node (4.4) is connected to a connection point (D) in the connection component (S).

2. Process seal according to Claim 1, **characterized in that** the thermoelectric structures are formed by slit-shaped incisions on the sealing ring (1) as connection lines (6).

3. Process seal according to either of Claims 1 and 2, **characterized in that** the disc regions (2, 3) at which three thermal nodes (4.1, 4.2, 4.3) for forming average temperature values are arranged are given different widths, wherein the length-width ratio for the three thermal nodes (4.1, 4.2, 4.3) is the same.

4. Process seal according to one of Claims 1 to 3, **characterized in that** the inner disc region (3) and the outer disc region (2) consist in each case of two thermoelectric half-rings, which overlap in the region of the connection component (S), wherein in the connection component (S) a thermoelectric interconnection of the two thermoelectric half-rings takes place, so that thermal nodes (4.1, 4.2, 4.3) on one side of the disc region (2, 3) are interconnected electrically parallel to thermal nodes (4.4, 4.5) arranged on the other side of the disc region (3, 2).

5. Process seal according to Claim 1, **characterized in that** the process seal consists of an elastic ring (7) and a carrier disc (8) inserted therein, wherein thermoelectric structures which are located above or within the elastic ring (7) are arranged on the carrier disc (8), and the elastic ring (7) in the installed state is located between two pipeline elements which are provided with fillets which correspond to the surface of the elastic ring (7).

6. Process seal according to Claim 5, **characterized in that** the process seal also comprises a closed flanged ring (9), wherein the carrier disc (8) consists of the thermoelectric material (a), is multiply slit and is connected to the closed flanged ring (9) of the thermal material (b) at discrete points in the form of thermal nodes (4), wherein the flanged ring (9) is located within the elastic ring (7) and the carrier disc (8) protrudes with its inner part into the elastic ring (7).

7. Process seal according to Claim 5, **characterized in that** the carrier disc (8) consists of the second thermal material (b) and a ring (9) of the first thermal material (a) into which the carrier disc (8) protrudes is arranged in the elastic ring (7).

8. Process seal according to one of Claims 1 to 7, **characterized in that** the electrical connection lines (6), which lead from thermal nodes (4) to connection points (A, B), have in each case an approximately equal ratio of cross-sectional area to line length.

9. Process seal according to Claim 5, **characterized in that** in the elastic ring (7) there are multiple thermal wires (10) of the first thermoelectric material (a), which are in contact with the carrier disc (8) of the second thermoelectric material (b).

10. Process seal according to Claim 5, **characterized in that** in the elastic ring (7) there are multiple thermal wires (10, 11) of the two thermoelectric materials (a, b), which are mechanically fixed on the carrier disc (8).

11. Process seal according to Claim 5, **characterized in that** the carrier disc (8) consists of the second thermoelectric material (b) and has in the elastic ring (7) a recess in which thermal conductors of the first thermal material (a) run and are connected at intervals to the carrier disc (8) by thermal nodes (4) .

12. Process seal according to Claim 10, **characterized in that** the carrier disc (8) has an encapsulation (5.1) of an electrically insulating material, which has in the inner region a bead-shaped thickening, which forms the elastic sealing ring (7), wherein the thermal wires (10, 11) at multiple points form thermal nodes (4), the connections of which are led to the outside.

13. Process seal according to Claim 1, **characterized in that** the sealing ring (1) is formed as a metallic hollow disc (1.1), which consists of an upper part-disc (1.1.1) and a lower part-disc (1.1.2), which are connected by a web (1.1.3), arranged in which are thermoelectric structures which consist of sheathed thermocouples (10), wherein the sheathed thermocouples (12) are attached to the hollow disc (1.1) at discrete, spaced-apart points.

14. Process seal according to Claim 13, **characterized in that** the ratios of the conductor cross section to conductor length of the inner conductors of the sheathed thermocouples (12) which lead from the connection points (6) to the respective thermal nodes (4) are almost the same.

15. Process seal according to Claim 14, **characterized in that** arranged in the hollow disc (1.1) are an outer carrier ring (1.2) of low heat-conducting material and an inner carrier ring (1.3) arranged concentrically thereto, between which there run thermopairs (T1... T5), the ends of which form thermal nodes (4.1... 4.5), wherein the thermal nodes (4.1... 4.5) are arranged in the web (1.1.3) in bumps (1.3.1), which protrude into the interior of the pipe, and wherein the thermopairs (T1... T5) are jointly led to the outside at a point on the circumference of the sealing ring (1).

16. Process seal according to Claim 14 or 15, **characterized in that** the thermopairs (T1... T5) are formed as sheathed thermocouples (12).

17. Process seal according to Claim 15 or 16, **characterized in that** inserted in the bumps (1.3.1) are metallic pins (13) with good thermal conductivity, from which in the installed state one end protrudes into the interior of the pipeline and the other end is in contact with a thermal node (4.1... 4.5), or arranged in the bumps (1.3.1) are blind holes into which the sheathed thermocouples (12) and/or the metallic pins (13) protrude.

18. Method for determining temperature and self-diagnosis on a process seal according to one of Claims 1 to 17, **characterized in that** the sealing ring (1) has multiple thermal nodes (4.1 to 4.5), with which in the installed state an average temperature value on the inner pipe wall and/or a temperature difference between the upper side of the inner pipe and the lower side of the inner pipe and in relation to the outer wall is determined.

19. Method according to Claim 18, **characterized in that** in the installed state the average temperature value on the inner pipe wall is determined by a parallel connection of the thermovoltages of at least three thermopairs (T) with the thermal nodes (4.1, 4.2, 4.3), wherein the average temperature value is taken at connection points (A, B) which are arranged in the connection component (S).

20. Method according to Claim 18, **characterized in that**, for determining a temperature difference on the upper and the lower side of the sealing ring (1), the thermovoltages of opposite thermal nodes (4.1 and 4.5) are compared.

21. Method according to Claim 18, **characterized in that**, on a sealing ring (1) according to Claim 5, thermoelectric conductor ends lying at the electrical connection points (A, B, C, D) are linked in parallel and/or differential connections, from which in the installed state information on parameters in the interior of the pipe is obtained, wherein a parallel connection of the connection points (B, C) to the connection points (B, D) provides a voltage signal connection with respect to the pipe half with the thermal nodes (4.4 and 4.5), whereas the connection pair (A, B) provides a voltage signal connection with respect to the pipe half with the thermal nodes (4.1, 4.2, 4.3), and altogether therefore a comparison of the two voltage signal averagings for the two pipe halves is made possible, wherein furthermore the connection pair (C, D) forms a voltage difference and this represents a measure of the difference between the temperatures on the outer surface of the pipe and in the interior of the pipe.

## Revendications

1. Garniture d'étanchéité pour processus industriel, ladite garniture d'étanchéité comprenant des nœuds thermiques intégrés (4.1 à 4.5), étant destinée à déterminer la température et effectuer un autodiagnostic de liaisons entre des éléments de canalisation et comportant dans un plan des structures thermoélectriques qui ont une forme circulaire ou partiellement circulaire à asymétries multiples et qui sont en un premier matériau thermique (a) dans une zone de disque extérieure (2) de la bague d'étanchéité (1) et en un deuxième matériau thermique (b) dans une zone de disque intérieure (3) de la bague d'étanchéité (1), les structures thermoélectriques formant au moins trois thermocouples (T1...T5) qui présentent une relation température-tension connue,
- le premier matériau thermique (a) et le deuxième matériau thermique (b) formant une pluralité de nœuds thermiques (4) qui sont disposés dans la direction circonférentielle de la bague d'étanchéité (1),
- des lignes de connexion électriques (6) étant guidées depuis les nœuds thermiques (4) vers un composant de connexion (S) au niveau du bord extérieur de la bague d'étanchéité (1) et depuis celui-ci vers l'extérieur et étant reliées électriquement dans des circuits parallèles, sériels et/ou différentiels où sont produits des signaux de tension thermoélectriques combinés qui sont utilisés pour la mesure de température et/ou la correction d'erreurs et/ou l'autodiagnostic, **caractérisée en ce que** à partir de la zone de disque extérieure (2), des connexions sont guidées depuis les nœuds thermiques (4.1, 4.2, 4.3), qui sont répartis à peu près à équidistance les uns des autres sur une première moitié de la circonférence de la zone de disque intérieure (3), vers un point de connexion (A) dans le composant de connexion (S), la zone de disque intérieure (3) est reliée à un point de connexion (B) dans le composant de connexion (S) ayant le matériau thermique (b) utilisé comme conducteur thermoélectrique commun, une partie de conducteur en le premier matériau thermique (a) est guidée depuis un autre nœud thermique (4.4) à un point de connexion (C) dans le composant de connexion (S) et, dans une deuxième moitié de la circonférence de la zone de disque intérieure (3), une partie de la zone de disque extérieure (2) est reliée à un point de connexion (D) dans le composant de connexion (S) à l'aide d'un nœud thermique (4.5), opposé à l'autre nœud thermique (4.4).

2. Garniture d'étanchéité pour processus industriel selon la revendication 1, **caractérisée en ce que** les structures thermoélectriques sont formées par des incisions en forme de fente au niveau de la bague d'étanchéité (1) pour former des lignes de connexion (6) .

3. Garniture d'étanchéité pour processus industriel selon l'une des revendications 1 et 2, **caractérisée en ce que** les zones de disque (2, 3), au niveau desquelles trois nœuds thermiques (4.1, 4.2, 4.3) sont disposés pour former la valeur de température moyenne, sont conçues avec des largeurs différentes, le rapport longueur sur largeur étant le même pour les trois nœuds thermiques (4.1, 4.2, 4.3).

4. Garniture d'étanchéité pour processus industriel selon l'une des revendications 1 à 3, **caractérisée en ce que** la zone de disque intérieure (3) et la zone de disque extérieure (2) comprennent chacune deux demi-bagues thermoélectriques qui se chevauchent au niveau du composant de connexion (S), une interconnexion thermoélectrique entre les deux demi-bagues thermoélectriques étant effectuée dans le composant de connexion (S) de sorte que des nœuds thermiques (4.1, 4.2, 4.3) situés d'un côté de la zone de disque (2, 3) sont interconnectés électriquement en parallèle avec les nœuds thermiques (4.4, 4.5) disposés de l'autre côté de la zone de disque (3, 2).

5. Garniture d'étanchéité pour processus industriel selon la revendication 1, **caractérisée en ce que** la garniture d'étanchéité pour processus industriel comprend une bague élastique (7) et un disque porteur (8) inséré dans celle-ci, des structures thermoélectriques étant disposées sur le disque porteur (8), lesquelles sont situées au-dessus ou à l'intérieur de la bague élastique (7) et la bague élastique (7) étant située, une fois installée, entre deux éléments de canalisation qui sont pourvus de gorges qui correspondent à la surface de la bague élastique (7).

6. Garniture d'étanchéité pour processus industriel selon la revendication 5, **caractérisée en ce que** la garniture d'étanchéité pour processus industriel comprend en outre une bague à collerette fermée (9), le disque porteur (8) étant en le matériau thermoélectrique (a), comportant de multiples fentes et étant relié en des points discrets en forme de nœuds thermiques (4) à la bague à collerette fermée (9) en le matériau thermique (b), la bague à collerette (9) étant située à l'intérieur de la bague élastique (7) et la partie intérieure du disque porteur (8) faisant saillie dans la bague élastique (7).

7. Garniture d'étanchéité pour processus industriel selon la revendication 5, **caractérisée en ce que** le disque porteur (8) est en le deuxième matériau thermique (b) et une bague (9) en le premier matériau thermique (a), dans laquelle le disque porteur (8) fait saillie, est disposée dans la bague élastique (7).

8. Garniture d'étanchéité pour processus industriel selon l'une des revendications 1 à 7, **caractérisée en ce que** les lignes de connexion électrique (6), qui sont guidées depuis des nœuds thermiques (4) aux points de connexion (A, B), ont chacune à peu près le même rapport surface en coupe transversale à longueur de ligne.

9. Garniture d'étanchéité pour processus industriel selon la revendication 5, **caractérisée en ce qu'**une pluralité de fils thermiques (10) en le premier matériau thermoélectrique (a) sont situés dans la bague élastique (7), lesquels sont en contact avec le disque porteur (8) en le deuxième matériau thermoélectrique (b) .

10. Garniture d'étanchéité pour processus industriel selon la revendication 5, **caractérisée en ce qu'**une pluralité de fils thermiques (10, 11) en les deux matériaux thermoélectriques (a, b) sont situés dans la bague élastique (7), lesquels sont fixés mécaniquement sur le disque porteur (8).

11. Garniture d'étanchéité pour processus industriel selon la revendication 5, **caractérisée en ce que** le disque porteur (8) est en le deuxième matériau thermoélectrique (b) et comporte dans la bague élastique (7) un creux dans lequel des conducteurs thermiques en le premier matériau thermique (a) s'étendent et sont reliés à intervalles au disque porteur (8) par des nœuds thermiques (4).

12. Garniture d'étanchéité pour processus industriel selon la revendication 10, **caractérisée en ce que** le disque porteur (8) comporte un enrobage (5.1) en un matériau électriquement isolant qui comporte dans la zone intérieure un épaississement en forme de bourrelet qui forme la bague d'étanchéité élastique (7), les fils thermiques (10, 11) formant en plusieurs points des nœuds thermiques (4) dont les connexions sont guidées vers l'extérieur.

13. Garniture d'étanchéité pour processus industriel selon la revendication 1, **caractérisée en ce que** la bague d'étanchéité (1) est conçue sous la forme d'un disque creux métallique (1.1) qui comprend une partie de disque supérieure (1.1.1) et une partie de disque inférieure (1.1.2) qui sont reliées par une nervure (1.1.3) dans laquelle sont disposées des structures thermoélectriques qui comprennent des éléments thermiques gainés (12), les éléments thermiques gainés (12) étant fixés au disque creux (1.1) à des emplacements discrets et espacés.

14. Garniture d'étanchéité pour processus industriel selon la revendication 13, **caractérisé en ce que** les rapports section transversale de conducteur à longueur de conducteur du conducteur intérieur des éléments thermiques gainés (12), qui sont guidés depuis les points de connexion (6) aux nœuds thermiques respectifs (4), sont presque égaux.

15. Garniture d'étanchéité pour processus industriel selon la revendication 14, **caractérisée en ce qu'**une bague de support extérieure (1.2) en matériau à faible conductivité thermique et une bague de support intérieure (1.3), disposée concentriquement à la précédente, sont disposées dans le disque creux (1.1), bagues entre lesquelles s'étendent des thermocouples (T1...T5) dont les extrémités forment des nœuds thermiques (4.1...4.5), les nœuds thermiques (4.1...4.5) étant disposés dans la nervure (1.1.3) dans des bosses (1.3.1) qui font saillie à l'intérieur des canalisations et les thermocouples (T1...T5) étant guidés conjointement vers l'extérieur en un point situé sur la circonférence de la bague d'étanchéité (1).

16. Garniture d'étanchéité pour processus industriel selon la revendication 14 ou 15, **caractérisée en ce que** les thermocouples (T1...T5) sont conçus sous la forme d'éléments thermique gainés (12).

17. Garniture d'étanchéité pour processus industriel selon la revendication 15 ou 16, **caractérisée en ce que** des tiges métalliques (13) à bonne conductivité thermique sont insérées dans les bosses (1.3.1), tiges dont une extrémité fait saillie, une fois installée, à l'intérieur de la canalisation et l'autre extrémité est en contact avec un nœud thermique (4.1...4.5), ou des trous borgnes, dans lesquels font saillie les éléments thermiques gainés (12) et/ou les tiges métalliques (13), sont ménagés dans les bosses (1.3.1).

18. Procédé de détermination de température et d'autodiagnostic d'une garniture d'étanchéité pour processus industriel selon l'une des revendications 1 à 10, **caractérisé en ce que** la bague d'étanchéité (1) comporte une pluralité de nœuds thermiques (4.1 à 4.5) permettant de déterminer, une fois montée, une valeur de température moyenne au niveau de la paroi de canalisation intérieure et/ou une différence de température entre le côté supérieur de la canalisation intérieure et le côté inférieur de la canalisation intérieure ainsi que par rapport à la paroi extérieure.

19. Procédé selon la revendication 18, **caractérisé en ce que**, à l'état installé, la température moyenne au niveau de la paroi intérieure de la canalisation est déterminée avec mise en parallèle des tensions thermiques d'au moins trois thermocouples (T) comprenant des nœuds thermiques (4.1, 4.2, 4.3), la valeur de température moyenne étant prise en des points de connexion (A, B) qui sont disposés dans le composant de connexion (S).

20. Procédé selon la revendication 18, **caractérisé en ce que**, pour déterminer une différence de température du côté supérieur et du côté inférieur de la bague d'étanchéité (1), les tensions thermiques de nœuds thermiques opposés (4.1 et 4.5) sont comparées.

21. Procédé selon la revendication 18, **caractérisé en ce que**, sur une bague d'étanchéité (1) selon la revendication 5, des extrémités de conducteur thermoélectrique adjacentes aux points de connexion électrique (A, B, C, D) sont combinées en circuits parallèles et/ou différentiels, à partir desquels des informations relatives à des paramètres à l'intérieur de la canalisation peuvent être obtenues à l'état installé, un circuit parallèle des points de connexion (B, C) avec les points de connexion (B, D) se traduisant par un circuit de signal de tension lié à la moitié de canalisation comprenant les nœuds thermiques (4.4 et 4.5), tandis que la paire de connexions (A, B) produit un circuit de signal de tension lié à la moitié de canalisation comprenant les nœuds thermiques (4.1, 4.2, 4.3) et, dans l'ensemble, une comparaison des deux moyennes de signal de tension pour les deux moitiés de canalisation est rendue possible, en outre la paire de connexions (C, D) formant une différence de tension et celle-ci représentant une mesure de la différence entre les températures sur la surface de canalisation extérieure et à l'intérieur de la canalisation.
